Europäisches Patentamt

**European Patent Office**

Office européen des brevets

(11) Publication number: **0 103 378**
A1

# EUROPEAN PATENT APPLICATION

(21) Application number: **83304228.6**

(22) Date of filing: **21.07.83**

(51) Int. Cl.³: **B 65 G 45/00,** B 65 G 25/08

(30) Priority: **24.07.82 GB 8221466**

(43) Date of publication of application: **21.03.84**
**Bulletin 84/12**

(84) Designated Contracting States: **BE DE FR GB**

(71) Applicant: **Liversedge (Materials Handling Engineers) Limited, The Oulton Institute Quarry Hill, Woodlesford Leeds LS26 8SX (GB)**

(72) Inventor: **Rowell, Arthur Surtees, The Oulton Institute Quarry Hill, Woodeslord Leeds, LS26 8SX (GB)**

(74) Representative: **Denmark, James, c/o Bailey Walsh & Co. 5 York Place, Leeds LS1 2SD Yorkshire (GB)**

(54) Gathering apparatus for belt scrapings.

(57) The invention concerns apparatus for gathering scrapings and spillage from conveyor belts and comprises an elongate collectin tray (14) and a pusher frame (34). The frame (34) comprises a plurality of pusher bars (17) arranged transversely of the length of the tray (14) and spaced apart in the length direction of the tray (14). The frame (34) is moved by means including a hydraulic ram (20) repeatedly for distances greater than the spacing of the bars (17) in scraping contact with the tray (14) so that the bars (17) displace collected material therealong. The moving means then raises the bars (17) out of contact with the tray (14) so as not to dispace the collected material backwardly, and returns them to their original position with each bar behind material displaced by a neighbouring bar during the forward movement.

0103378

-1-

The invention relates to apparatus for collection and disposal of scrapings and spillage from endless belt conveyors.

A problem exists at conveyor transit points when handling wet or sticky material which clings to the belt after the main bulk of the material has been discharged into a transfer chute. The clinging material tends to drop off the return strand of the belt forming piles of material on the conveyor housing floor, and also builds up on the return idlers which are in contact with the dirty side of the belt. Belt scrapers of various types are applied to dislodge the clinging material at or near the discharge end of the belt so that scrapings fall into the transfer chute, but none is completely successful and the normal efficiency is about 75%.

According to the present invention there is provided in apparatus for collection and disposal of scrapings and spillage from an endless belt conveyor having an upper reach for conveying material thereon to a discharge end and a lower return reach, means defining a collecting surface arranged below said return reach, pusher means and power operated means for moving the pusher means over the said surface repeatedly forwardly towards a discharge location and backwardly whereby the pusher means are in scraping contact with the surface during the forward movement and are raised out of contact with the surface during the backward movement.

When the apparatus also includes a materials receiving chute at the discharge end of the conveyor, said collecting surface may terminate above said chute. Alternatively, elevating means may be provided for transferring material from the discharge location onto the conveyor.

Said pusher means may comprise a plurality of pusher bars transverse to the direction of back and forth movement, and each bar is preferably spaced from its neighbour in the direction of movement thereof by a distance equal to or less than the extent of said backward and forward movements. The power operated moving means may comprise a hydraulic ram and cam tracks and followers. Each cam track is preferably capable of being tilted between first and second orientations to allow scraping forward and raised backward movements of the pusher means.

At least one idler roller may be provided below the return reach of the conveyor and scraper means may be provided to act against the or each idler roller and further scraper means may be provided to act against the underside of the return reach of the conveyor.

The elevating means may comprise a further conveyor encircling the belt conveyor transversely thereof.

Embodiments of the invention will now be described by way of example and with reference to the accompanying drawings, of which:-

Fig. 1 is an end elevation of a conveyor belt assembly having scrapings gathering mechanism, in one embodiment.

Fig.2 is a section on line II-II of Fig.1.

Fig. 3 is a perspective view of gathering mechanism in a further embodiment and

Fig. 4 is a series of views of the pusher means in different positions

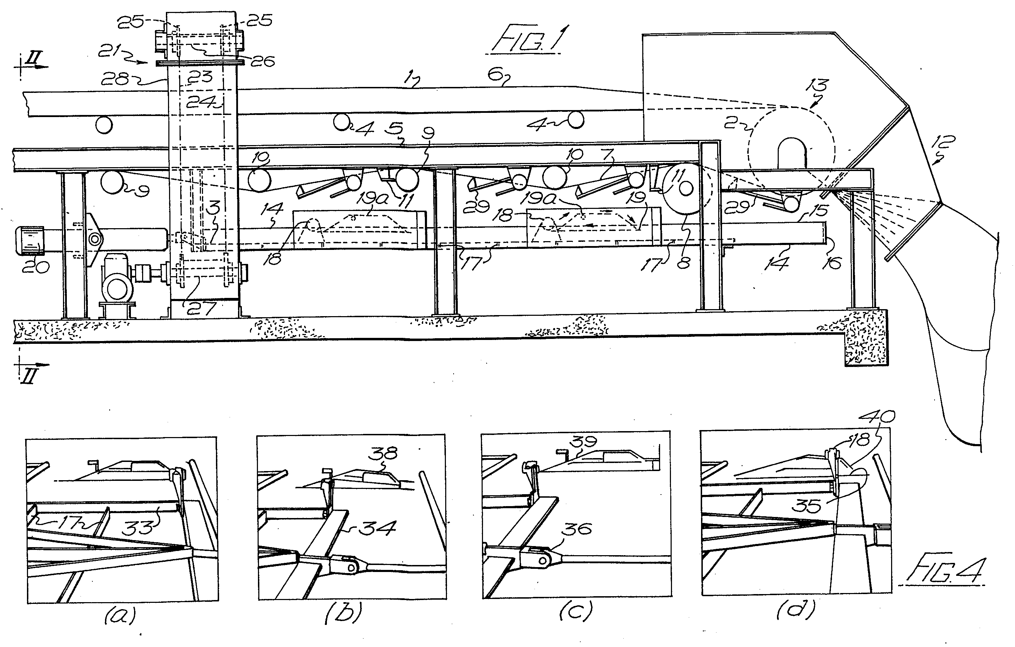

As shown in Figure 1, an endless conveyor belt 1 is arranged in conventional manner about a forward roller 2 and a rearward roller (not shown) with its upper reach 6 supported on transverse rollers 4 which, like the forward and rearward rollers are mounted in bearings (not shown) supported by a framework 5. Lower reach 7 of the belt passes over transverse snub roller 8 and idler rollers 9, whilst the reach is tightened by passage under transverse idler rollers 10 spaced between pairs of rollers 9.

A chute 12 is arranged below the forward end of the conveyor belt 1 in order to catch material conveyed on the upper reach 6 to the discharge end 13. It is known, however, that with wet or sticky material, some adheres to the surface of the belt and it is desirable that this material should be returned to the chute.

Scrapers 11 of known type are accordingly arranged against the periphery of the rollers 9 whilst spring loaded scrapers 29 are arranged in scraping contact with the return reach 7 between snub roller 8 and the next following idler roller and likewise between successive pairs of idler rollers.

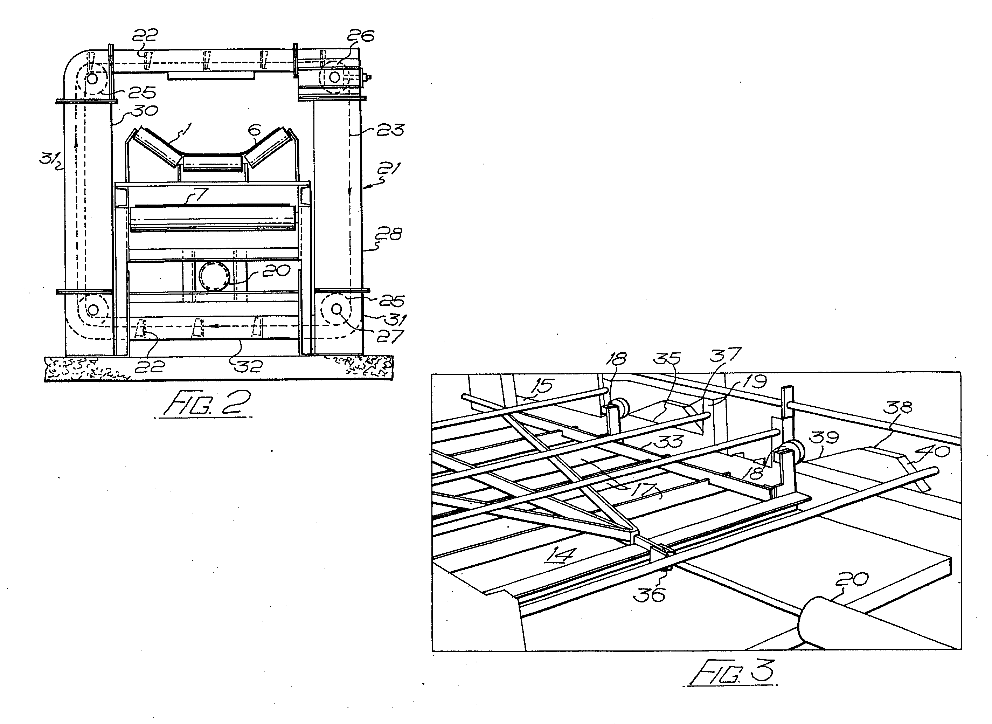

An elongate horizontal tray 14 is provided below the lower reach 7 to catch material dislodged by the scrapers. The tray is somewhat wider than the belt so as to catch material falling over the edge of the belt, and has low lateral walls 15. One end of the tray is, in the embodiment shown in Figure 3, arranged over the chute 12.

A plurality of pusher bars 17 are arranged on and transversely of the tray 14 and secured to lateral members 33 to form a flat rectangular frame 34 as shown in Fig. 3. An electro-hydraulic ram 20 mounted on the framework 5 is linked to the frame 34 by means of linkage 36 so as to impart to and fro movement of the frame over the tray 14.

The frame 34 has four wheels 18 (two only shown in Fig. 3) each of which runs in a guide 19 fastened to one or other of the walls 15. The guide 19 comprises a horizontal track element 35 and an upper track element 37. The upper element comprises a raised portion 38 and respectively longer and shorter downwardly inclined portions 39,40. The element 37 is capable of tilting about a horizontal axis so that in one orientation the portion 38 is horizontal and the inclined portion 39 contacts the track 35, and in the other orientation the inclined portion 39 is lifted from the track 35 so as to allow a wheel 18 to pass along the track 35 beneath the lower end of the portion 39.

Fig. 4 shows the movement of one of the wheels 18 of the frame 34, exemplifying the movement of each of the wheels thereof, in four stages. At stage (a) the frame is at its rearmost position, that is to say nearest to the ram 20. The wheel 18 rests on the track element 35 and as it moves forward, that is, to the left in the Figure, it can pass under the shorter inclined portion 40 of the upper track element 37. During the forward movement of the wheels, each along its associated track element 35, the pusher bars 17 scrapingly engage the upper surface of the tray 14.

At stage (b) the ram 20 approaches its foremost position and the wheel engages the underside of the longer inclined portion 39 of the upper track element 37 and tilts the element clockwise as shown until it can pass under the portion to arrive at the foremost stage (c). The element 37 is biassed to the position shown at stage (a) so that as the wheel reaches its foremost position the inclined portion 39 again engages the track element 35.

The ram then begins to retract and the frame 34 is pulled to the right in the Figure. Each wheel 18 simultaneously rises up its corresponding inclined portion 39 so that the whole frame 34 is raised and the bars 17 are lifted upwards from the tray 14.  As the frame moves towards its rearmost position again, stage (d) is reached at which the upper track element 37 tilts clockwise so that the shorter inclined portion 40 approaches the track element 35 and the wheel 18 runs down that inclined portion and returns to the position of stage (a).

In their forward, tray-engaging movement, each of the bars 17, of which the front face is substantially vertical, pushes forwardly material deposited on the tray 14. The dimensions of the upper track elements 37, and particularly the elevation of the raised portion 38 above the track element 35 is chosen so that there is as little backward displacement of the material as possible on the  return movement of the bars 17. The ram 20 moves the frame 34 forward a distance greater than the spacing between neighbouring bars 17 so that material is pushed forwardly by the rearmost bar of a neighbouring pair of bars to a position in front of that to which the foremost bar of the pair returns during the subsequent backward stroke thereof. Thus quantities of collected material are urged forwardly by successive bars in successive forward movements of the frame 34, until, in the Figure 3 embodiment, the foremost bar of all dislodges the material over the end of the tray 14 so that it falls onto the chute 12.

The ram 20 is operated intermittently at a frequency which is manually preset according to requirements which may call for a cycle every 5 minutes or as infrequently as once every 30 minutes.

0103378

In cases where it is not possible to push the material forward into the chute, the guide 19 is modified so that, as shown in Figure 1, the bars 17 move in scraping contact with the upper surface of the tray 14 in a direction away from the end 16 and are raised from the surface during the next return stroke towards the end 16. In this manner material is gradually moved along the tray 14 away from the end 16 and towards an elevating conveyor 21 located at the other end 3 of the tray.

The elevating conveyor 21 comprises a substantially rectangular casing 28 essentially encasing the tray 14 and the belt 1 and comprising inner and outer walls 30,31 between which are arranged a plurality of conveyor flights 22 (some only shown in Fig.2). The flights are elongate in the length direction of the tray 14 and spaced apart from one another. Each flight is attached at its respective ends to endless sprocket chains 23, 24. The chains 23, 24 are entrained about sprocket wheels 25 mounted on shafts 26,27 which are parallel to one another and to the direction of movement of the pusher bars 17. At least one of the shafts 26, 27 is driven and, the sprocket wheels 25 thereon being fast thereto, the chains 23, 24 are driven so that the flights 22 execute successively a lateral, vertical upward, lateral and vertical downward movement between and in contact with the walls 30,31 of the casing 28.

The inner wall 30 is cut away where the casing underlies the tray 14 so that as the pusher bars continue to displace material towards end 3 of the tray it is gradually pushed over the end and falls onto the base of the casing formed by the inner face of the lower portion 32 of the outer wall 31 and into the path of the flights 22.

The flights displace the material along the base portion 32 outwardly relative to the tray and then upwardly between the walls 30,31 and finally inwardly over the upper reach 6 of belt 1 where the inner wall 30 is again cut away so that material dislodged over the edge thereof falls onto the upper reach of the conveyor.

To cope with material of the form of a slurry, the scraper bars 17 and the flights 22 are provided with rubber or similar sealing strips along their edges which contact respectively the tray 14 and the casing 28.

The gathering mechanism requires little headroom and occupies space between the conveyor belt which is otherwise of little use. The use of the equipment described saves labour costs in manually cleaning up and results in safer plant operation. Because the gathering mechanism operates only intermittently, the running costs are low. By use of a scraper frame with a large number of bars a ram of relatively short stroke, is capable of cleaning a great length of tray.

CLAIMS

1. Apparatus for collection and disposal of scrapings and spillage from an endless belt conveyor having an upper reach for conveying material thereon to a discharge end and a lower return reach, characterised in that it further comprises means defining a collecting surface arranged below said return reach, pusher means and power operated means for moving the pusher means over the said surface repeatedly forwardly towards a discharge location and backwardly whereby the pusher means are in scraping contact with the surface during the forward movement and are raised out of contact with the surface during the backward movement.

2. Apparatus as claimed in Claim 1 wherein said pusher means comprises a plurality of pusher bars transverse to the direction of back and forth movement.

3. Apparatus as claimed in Claim 2 wherein each bar is spaced from its neighbour in the direction of movement thereof by a distance equal to or less than the extent of said backward and forward movements.

4. Apparatus according to any one of Claims 1 to 3 wherein the moving means comprise cam tracks and followers, each cam track being capable of being tilted between first and second orientations to allow scraping forward and raised backward movements of the pusher means.

5. Apparatus according to any one of the preceding Claims further comprising elevating means for transferring material from the discharge location onto the conveyor.

6. Apparatus according to Claim 5 wherein the elevating means comprises a further conveyor encircling the belt conveyor transversely thereof.

7. Apparatus for the collection and disposal of scapings and spillage from an endless belt conveyor substantially as described with reference to the drawings.

*FIG.1*

*FIG.4*

(a)    (b)    (c)    (d)

0103378

FIG. 2

FIG. 3

0103378

**European Patent Office**  -    **EUROPEAN SEARCH REPORT**

| DOCUMENTS CONSIDERED TO BE RELEVANT | | EP 83304228.6 | |
|---|---|---|---|
| Category | Citation of document with indication, where appropriate, of relevant passages | Relevant to claim | CLASSIFICATION OF THE APPLICATION (Int. Cl. ³) |
| A | FR - A - 2 498 165 (COAL INDUSTRY (PATENTS) LTD.) -- | | B 65 G 45/00 B 65 G 25/08 |
| A | US - A - 3 827 549 (HUNTER) -- | | |
| A | DD - A - 138 055 (KRAUTHEIM) ---- | | |
| | | | **TECHNICAL FIELDS SEARCHED (Int. Cl. ³)** |
| | | | B 65 G 45/00 B 65 G 25/00 |
| | The present search report has been drawn up for all claims | | |

| Place of search | Date of completion of the search | Examiner |
|---|---|---|
| VIENNA | 15-11-1983 | PISSENBERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82